# EUROPEAN PATENT APPLICATION

(11) **EP 2 755 259 A1**
(43) Date of publication of application: **16.07.2014**
(21) Application number: 13150846.7
(22) Date of filing: 10.01.2013
(51) Int. Cl.: H01M 4/04, H01M 4/1391, H01M 4/36, H01M 4/485, H01M 4/583, H01M 4/62

(54) **Self-assembled composite of graphene oxide and H4V3O8**

(71) Applicant: Belenos Clean Power Holding AG, 2502 Bienne (CH)
(72) Inventor: Mettan, Yoann, 1902 Evionnaz (CH)
(74) Representative: Supper, Marc

(57) **Abstract**

A composite material comprising graphene oxide and an electrochemically active ingredient, in particular H₄₋ₓV₃O₈ with x ranging from 0.1 to 2.2, as well as a method for its manufacture were developed. The composite material is suitable for being used as electrode in an electrochemical cell.

## Description

### Technical Field

This invention relates to composite materials of graphene oxide and a transition metal electrochemically active material (EAM), especially a vanadium compound, a method for producing such composite materials and their use.

### Background of the Invention

Graphite oxide is a material obtained by oxidation of natural or synthetic graphite. The different oxidation procedures are named according to their respective inventors, i.e. the Brodie method, the Staudenmaier method, the Hummer and Offeman method [1]. Graphite oxide consists of multiple stacked graphene sheets bearing oxygen containing functional groups such as epoxy, hydroxyl or carboxylic moieties. Individual sheets of graphite oxide will be referred to as graphene oxide in the following.

Graphite oxide is a long known material that regained significant attention since Andre Geim and Konstantin Novoselov were awarded the Nobel price of physics 2010 for the discovery of graphene, a one-atom-thick planar sheet of sp2-bounded carbon [2]. Since then many fields ranging from optical to electrochemical applications have benefited from the implementation of graphene, owing to the outstanding transport and mechanical properties of the material [3].

Graphite oxide can be conveniently used as graphene precursor, especially for the production of bulk quantities. The exfoliation of graphite oxide to graphene oxide can be carried out in aqueous medium in concentrations up to 1g/L [4]. The thermal or chemical reduction of graphene oxide yields reduced graphene oxide (RedGO) [5]. The C:O ratio rises from about 3 in graphite oxide to higher than 8 if graphite oxide is (i) heated to more than 1000 °C or (ii) treated hydrothermally at 150 °C or (iii) exfoliated to graphene oxide and reduced chemically [6]. While graphene oxide is an insulator, the electronic conductivity of RedGO is sufficient for most applications, such as use in electrochemical storage devices [4].

However, the composite formation of graphene oxide with a material of choice and the subsequent reduction of graphene oxide to RedGO are by no means trivial. In fact, the prior art teaches reduction of graphene oxide to RedGO before or at last in an early step of the composite formation [7][8][9][10][11]. Additionally, a heating step to at least 300 °C is commonly applied to maximize the electronic conductivity of the composite [12].

The heating step to at least 300 °C restricts the type of material to be used in a composite to materials that can withstand 300 °C and more. Above all, the main drawbacks in the composite formation procedures of the prior art originate from the fact that RedGO is used instead of graphene oxide. RedGO, like graphene sheets, graphene nano platelets and the like cannot be dispersed in high concentration and in a monolayer form in water without using surfactants, organic solvents or other chemicals generally acting as stabilizers to prevent aggregation and/or precipitation [7][8][9][10].

Due to these surfactants, organic solvents and/or other chemicals, the prior art fails to keep the carbon content of RedGO composites below 5%, which is highly desirable for their implementation in electrochemical storage devices. Further, the presence of reducing agents and/or stabilizers in the reaction mixture used for composite formation implies a work up and/or purification steps such as pyrolysis of the surfactants. Thus the high RedGO content and the complexity of the procedures in the prior art counterbalance the advantage of using graphene or reduced graphene oxide, which are expensive materials with unique properties.

Therefore there is still a need for an improved composite material comprising at least one EAM in nanoparticulate form and RedGO, especially for an improved composite material comprising at least one EAM in an anisotropic form like fibers and RedGO, as well as a method for its manufacture.

### Summary of the Invention

In a first aspect, the present invention provides a composite material comprising reduced graphene oxide (RedGO) with a C:O ratio above 3 and at least one electrochemically active material (EAM) in form of nanoparticles, preferably such material wherein the carbon content of the composite is at most 5 % by weight. For clarity reasons, in connection with the specific method wherein the EAM is partially oxidized, the EAM starting material is termed startEAM while the EAM present in connection with RedGO is termed oxEAM to indicate the partial oxidation of the transition metal in the EAM due to the reaction with the graphene oxide. Where the product is concerned merely the abbreviation EAM is used.

In a second aspect, the present invention provides a method for producing the composite material comprising self-assembling graphene oxide and a nanoparticulate startEAM, in particular a temperature sensitive startEAM like tetravalent vanadium oxohydroxide, (i) at a preferably not enhanced temperture, e.g. at room temperature or lower and (ii) in aqueous medium free of organic solvents, surfactants and/or additional reducing agents into a three dimensional structure where graphene oxide and the nanoparticulate start EAM are intimately mixed [13]. This mixture is then dried and subjected to a temperature ranging from 50 °C to just below the decomposition temperature of the startEAM/oxEAM, e.g. about 200°C for a tetravalent vanadium oxohydroxide, for a time suitable to reduce the graphene oxide to the desired degree by oxidizing the transition metal of the start-EAM.

Nanoparticles in the sense of the present invention are particles that have at least one dimension that does not exceed 500nm, preferably does not exceed 300 nm.

The reduction/oxidation step can be performed in situ. For tetravalent vanadium oxohydroxide, a presently preferred temperature is about 180°C. This temperature is suitable to change H₄V₃O₈ to H_{4-X}V₃O₈. While x may range from 0.1 to 2.2, it is preferred that the graphene oxide is reduced to an extent corresponding to x about 2.

Due to the absence of carbon comprising material/compounds besides of graphene oxide, the present invention also provides a method to limit the carbon content in a RedGO and oxEAM composite to less than 5%, preferably to less than 4% or less than 3% but in general not less than 2 %, while maintaining high performances such as high specific energy if used in an electrochemical cell.

The EAM used as a starting material may be any electronically/electrochemically active transition metal compound but preferably is a vanadium compound, much preferred H₄V₃O₈ that is converted to H_{4-X}V₃O₈ upon reduction of the graphene oxide. While the presently preferred vanadium compound used as starting material is pure H₄V₃O₈, the present invention also encompasses such material wherein part of the hydrogen is replaced by alkali metals like sodium and/or lithium, preferably lithium. Also encompassed are tetravalent vanadium oxohydroxides that are doped with other transition metals like Cr, Mn, and/or Mo.

Dependent on the actually chosen EAM, the heating temperature may vary. However in a first step it has to be maintained below the decomposition temperature, preferably at least 10°C below the decomposition temperature.

If another modification or composition of the startEAM/oxEAM is desired, it is also within the scope of the present invention to add a step comprising heating to a higher temperature like up to 400°C.

The method of the present invention is especially suitable for startEAM/oxEAM with an anisotropy in their shape, e.g. with fibrous morphology. In the scope of the present invention, particles wherein one dimension exceeds the other dimensions by at least a factor of two, generally more than five, are termed fibers. Such fibers usually build lose aggregates with very few contact points between individual particles. This feature is a serious limitation to the implementation of such a fibrous active material in electrochemical devices. It is therefore an additional benefit of the present invention to provide the RedGO in a form allowing for charge transport within a matrix composed of anisotropic oxEAM particles. Such particles are wrapped within and linked together by RedGO-sheets resulting in a three dimensional mesoporous structure that may be used as such or that may incorporate additional electronically/electrochemically active compounds in the form of nanoparticles like transition metal oxides, transition metal phosphates, transition metal chalcogenides, transition metal halides, silicon and combinations thereof. Alone or in combination with the just mentioned nanoparticles metallic nanoparticles and/or semiconducting particles may also be incorporated. Such composite materials without incorporation of additional EAM or such composite materials incorporating additional EAM are suitable to form electrodes. Such electrodes can consist of the composite material or they may comprise such material as a e.g. coating on a guidewire.

In one embodiment, the composite material described in the present invention may be produced by a method comprising the steps of
(a) mixing startEAM with an aqueous graphene oxide solution
(b) drying the graphene oxide-startEAM-composite
(c) heating the dry graphene oxide-startEAM-composite to a temperature of at least 50°C but below the decomposition temperature of the EAM and for a time sufficient to induce the desired reduction of the graphene oxide with respective change in the oxidation state of the transition metal in the EAM.

In this reaction the graphene oxide in the originally formed and dried compound of graphene oxide and startEAM may be reduced to RedGO in situ, in the dry state and without the addition of a reducing agent other than the startEAM that during the graphene oxide reduction is oxidized. The state of the art teaches that the conversion of graphene oxide to RedGO involves a thermal treatment above 300°C and temperatures lower than 300 °C so far were considered to be not sufficient to reduce graphene oxide for use in electrochemical applications.

In contrast to this belief, the present invention allows for the preparation of composite materials and electrodes that contain at least 95% active material by weight at low temperature. Due to the three dimensional structure of the RedGO-EAM composite, said electrode may be a free standing structure of said composite material.

However, if the EAM to be used in a battery is not thermally critical, a further heating step after step (c) may be added. Such additional heating step can be performed at high temperatures such as e.g. up to 400 °C.

Also within the scope of the present invention is further processing of the composite formed in step (a) e.g. by at least one of coating, drop casting or pasting.

Dependent on the EAMs, the composite electrode may be used as positive or negative electrode in an electrochemical cell of a lithium metal or lithium ion battery.

Thus, a lithium metal or lithium ion battery comprising at least one electrochemical cell with one positive electrode and one negative electrode, at least one of said electrodes comprising a composite material of the present invention is also a subject matter of the present invention, in particular such a battery wherein said positive electrode has a practical specific energy of at least 700 Wh/kg.

### Short Description of the Drawings

- Fig.1:: XRD pattern of H₂V₃O₈ (Inorganic Crystal Structure Database ICSD 80572).
- Fig.2:: XRD pattern of H₄V₃O₈.
- Fig.3.: XRD pattern of graphite oxide.
- Fig.4:: XRD pattern of the H₄V₃O₈-graphene oxide (5% by weight) composite.

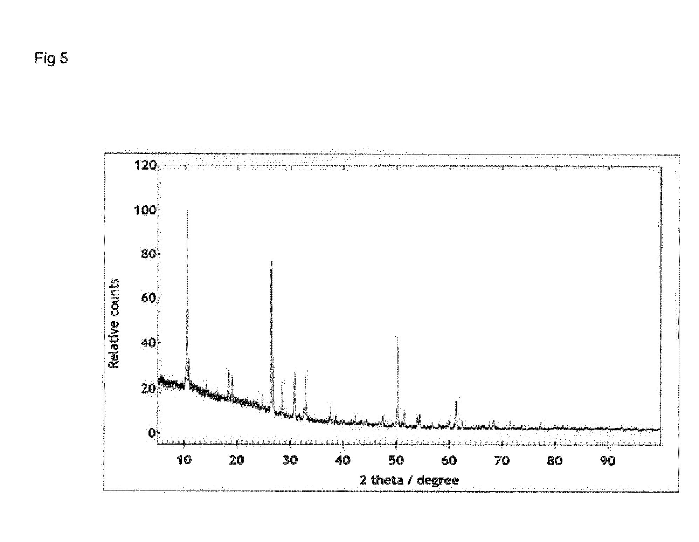

- Fig.5:: XRD pattern of the H_{4-X}V₃O₈-RedGO composite obtained by thermal treatment (1 h at 180 °C in air) of the H₄V₃O₈-graphene oxide (5% by weight) composite.
- Fig.6.: Comparison of the XRD patterns of the H₄V₃O₈-graphene oxide composite (thick) and of the H_{4-X}V₃O₈-RedGO composite (thin) after thermal treatment 1h at 180 °C in air. The pattern of the thermally treated composite (thin) shows the typical features of H2V3O8.
- Fig.7:: SEM micrographs of the H₂V₃O₈-RedGO composite showing separated aggregates of vanadium oxohydroxide fibers next to RedGO sheets.
- Fig.8.: SEM micrographs of the H₄V₃O₈-graphene oxide composite showing tetravalent vanadium oxohydroxide fibers wrapped into a graphene oxide sheets.
- Fig.9:: SEM micrographs of the H₄V₃O₈-graphene oxide composite showing graphene oxide linking vanadium oxohydroxide fibers.
- Fig. 10:: Comparative example of the practical cathodic specific energy vs. cycles (100 A/kg) for the H_{4-X}V₃O₈-RedGO composite produced according to Example 3 (stars, cf. Fig. 8) and for the H₂V₃O₈-RedGO composite shown in Fig.7 heated to 180 °C for 1 hour (crosses) both used as positive electrode in a lithium battery.

### Description of the Preferred Embodiments

The invention is now further described for the embodiment with the EAM starting material H₄V₃O₈.

The startEAM H₄V₃O₈ is presently preferred because it seems to catalyze the reduction of graphen oxide. However, other transition metal compounds with similar electrochemical potential may also be suitable.

The most visible feature and, at the same time, the main advantages of the present invention resides in the simplicity of the method and in the quality of the compound material obtainable therewith. By using the method of the present invention, the formation of a composite material of graphene oxide and a tetravalent vanadium oxohydroxide is straightforward.

Dry solid H₄V₃O₈ is dispersed in an aqueous graphene oxide solution. The composite forms at once and water can be removed by evaporation.

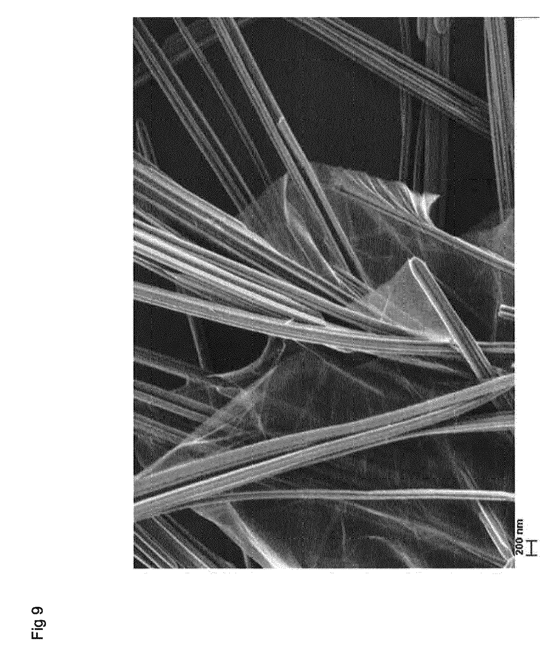

Typically, the composite consists of particles of EAM wrapped within graphene oxide sheets. The thickness of the graphene oxide sheets varies from 1 nm to 50 nm, and preferably is less than 20 nm. The EAM is not sandwiched between graphene oxide sheets in a layer-by-layer two-dimensional structure but rather linked by graphene oxide in a three-dimensional pattern, as shown in Fig. 9.

The composite material described above is then converted to a RedGO/ H_{4-X}V₃O₈ (0.1 <x<2.2) oxohydroxide positive electrode suitable for direct use as positive electrode in a lithium battery. The practical specific energy of such a positive electrode reaches about 800 Wh/kg. The reduction of the graphene oxide to RedGO is carried out in situ, in the solid state, at temperatures below 200 °C and without the addition of a reducing agent other than the startEAM. In addition, the reduction of the graphene oxide can take place in air.

The method of the present invention is suitable to provide a composite wherein startEAM/oxEAM particles that are otherwise difficult to interconnect because of their shape are linked together in an electronically conducting network. In particular fibrous particles may build lose aggregates with very few contact points between individual particles. Such fibrous structure so far is considered as a serious limitation to the implementation of such a fibrous active material in electrochemical devices. According to the present invention, however, such fibrous material, like H_{4-X}V₃O₈ with x ranging from 0 to 2.2, can be additionally connected by graphen oxide/RedGO sheets.

The EAM/RedGO composite material of the present invention allows for the preparation of composite electrodes that contain at least 95% active material by weight. Due to the porosity, however, incorporation of additional nanoparticulate EAM into the composite (said composite is then acting as matrix) is possible. Dependent on the additional EAM present the kind of electrode can be changed from positive (e.g. pure RedGO/ H_{4-X}V₃O₈) to negative.

The composite electrode may be used as positive or negative electrode in an electrochemical cell.

For the sake of clarity and to allow for a better understanding of the present invention, some preferred embodiments are further illustrated in the Examples below. The following procedures are not meant to limit the scope of the present invention but rather to describe embodiments by way of example.

### Example 1: Preparation of starting materials

### Synthesis of H₄V₃O₈

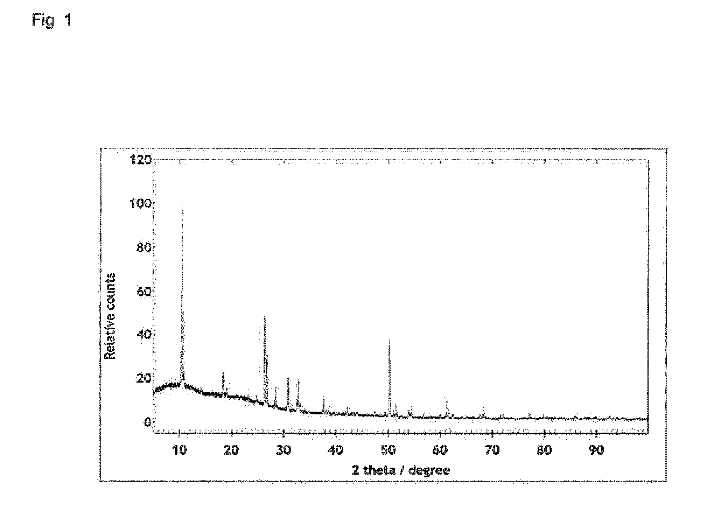

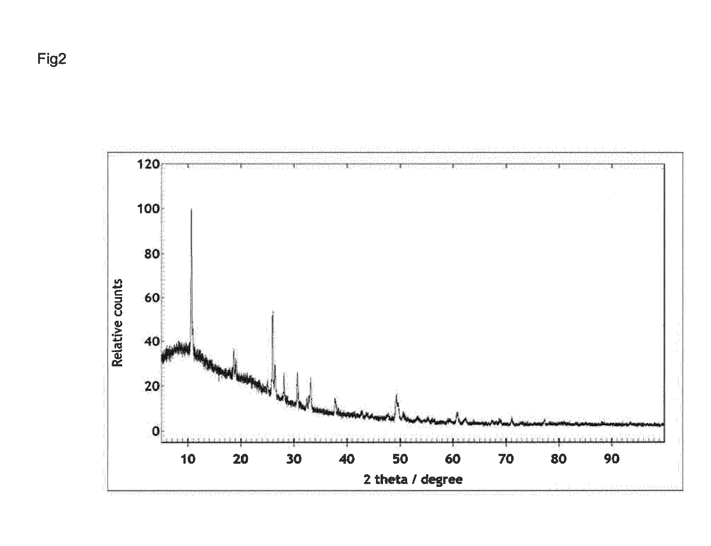

H₄V₃O₈ can be synthesized from the precursor H₂V₃O₈ (ICSD 80572; XRD pattern, see Fig. 1) by one of the various procedures described in [13]. Ascorbic acid was chosen as the reducing agent for the synthesis of the H4V3O8 used in the present invention. For the XRD pattern see Fig. 2.

### Synthesis of Graphite Oxide

Natural or synthetic graphite can be used as starting materials. Graphite oxide can be obtained by the Staudenmaier method, the Hummer and Offeman method or the Brodie method. The detailed individual procedures are available in the literature. The Graphite oxide used in the present invention was synthesized by a modified Brodie process, using sodium chlorate and fuming nitric acid as oxidizing reagents.

10 g graphite were thoroughly mixed with 85 g sodium perchlorate powder. The mixture was cooled to approx. -20°C using an ice sodium chloride mixture and then slowly stirred with an efficient stirrer. Then 60 ml fuming nitric acid were very slowly added. The viscous green mass was stirred for an additional 30 minutes at room temperature. The mixture was left over night without agitation and then slowly heated to 60°C for 10 hours. Then 2 liters of water were added to the reaction product, the mixture was filtered and once washed with diluted hydrochloric acid and at least twice, each time with 2 liters of water. After filtration, the obtained mass was freeze dried yielding about 14 g of graphite oxide as a very fluffy ivory colored powder.

Based on the elemental analysis of the graphite oxide the chemical formula C₈O₄H_{1.7} results. After subtraction of hydrogen as water the formula C₈O_{3.2} is obtained with a C/O ratio of 2.5. Using X-ray diffraction analysis it could be shown that the inter-planar distance of 3.35 Å in graphite was enlarged to 6.1 Å in dry graphite oxide.

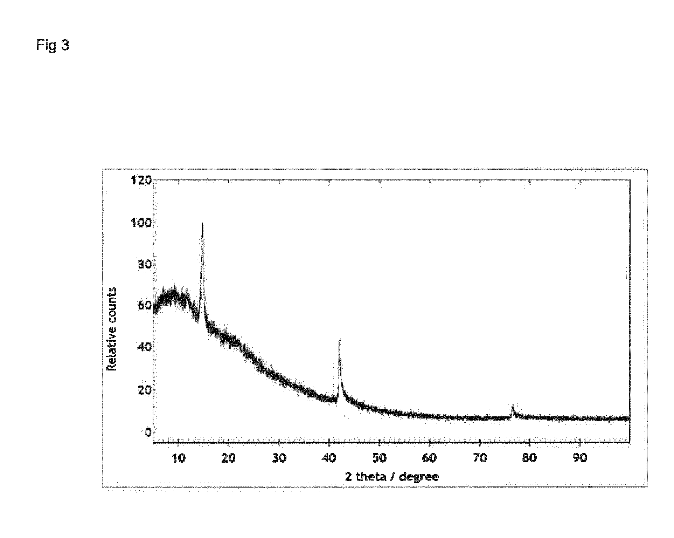

The C:O ratio of the graphene oxide powder preferably lies between 2.5 and 2.9 and is more preferably inferior to 3.1. For the XRD pattern see Fig. 3.

### Preparation of Graphene Oxide Solution

100 mg of graphite oxide powder was dispersed in 100 ml deionized water. The mixture was stirred at room temperature for 30 minutes to obtain a homogeneous golden suspension. 2 mg of lithium hydroxide monohydrate were added to the suspension, which turned immediately in a clear orange solution. Any other way to shift the pH value of the reaction mixture to higher than 7 yields a graphene oxide solution from a graphite oxide suspension.

### Example 2 (for comparison): Preparation of H₂V₃O₈-RedGO Composite

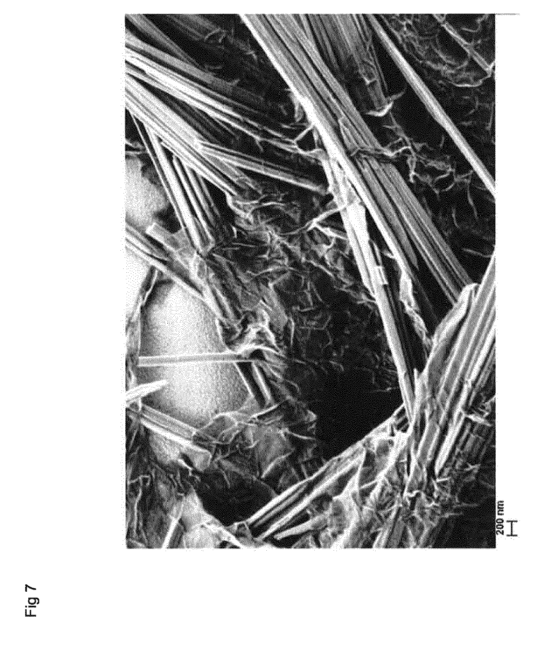

95 mg of H₂V₃O₈ were added to a solution comprising 60 mg lithium ascorbate and 5 ml of graphene oxide solution. The mixture was autoclaved 20 minutes at 120 °C. The resulting composite was isolated by filtration and dried 1 h at 180 °C in air. A SEM micrograph of this product is shown in Fig. 7.

### Example 3: Preparation of the H_{4-X}V₃O₈-RedGO Composite of the present invention

### Preparation of the H₄V₃O₈-Graphene Oxide Composite

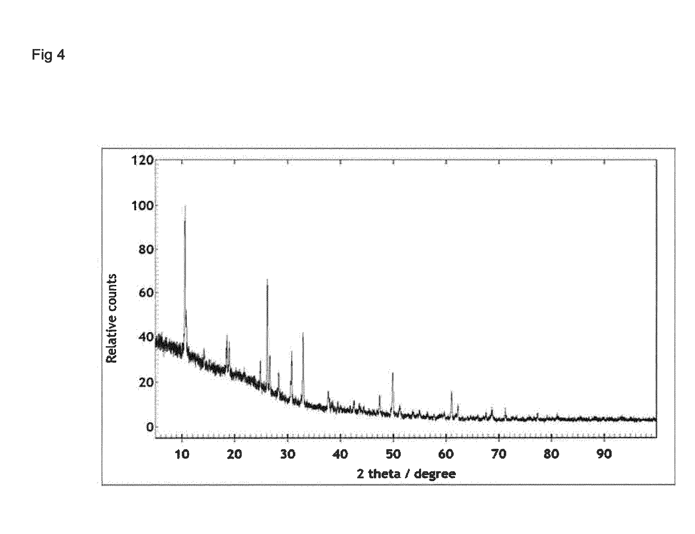

95 mg of H₄V₃O₈ were added to a 5 ml graphene oxide solution upon vigorous stirring. The composite formed at once when solid H₄V₃O₈ was dispersed into the graphene oxide solution. The composite could then be further processed, say coated, drop-casted, pasted and so forth. Water was removed by evaporation. The XRD pattern of this product is shown in Fig. 4.

### Preparation of the H_{4-X}V₃O₈-RedGO Composite

H_{4-X}V₃O₈-RedGO composite was obtained by heating the dry H₄V₃O₈-graphene oxide composite in air.

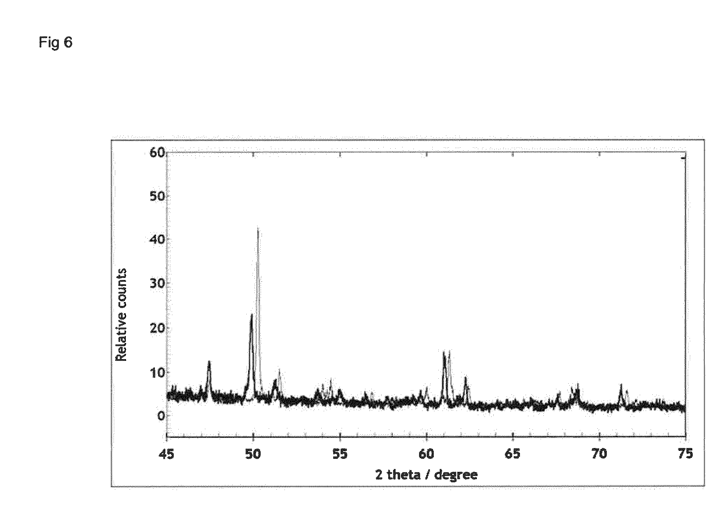

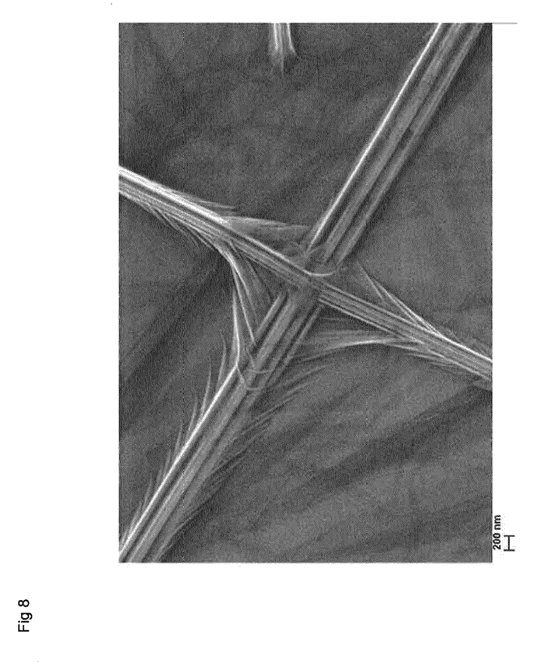

An increase of the temperature from 25 °C to 180 °C and keeping at 180 °C for 1 h triggered the reduction of the graphene oxide to reduced graphene oxide by the tetravalent vanadium oxohydroxide, while the later was partly oxidized to the pentavalent state. The dry graphene oxide - tetravalent vanadium oxohydroxide composite is grey while the reduced graphene oxide - pentavalent/tetravalent vanadium oxohydroxide is green. The value of x was about 2. A comparison of this composite materal with the not yet reduced graphene oxide -EAM-composite is shown in Fig. 6. and two SEM images of the invenetive compound material are shown in Fig. 8 and 9

By variation of the temperature between 50°C and about 200°C and the time, other oxidation/reduction states can be obtained like x = 0.1 to 2.2

### Electrochemical Measurements

H_{4-X}V₃O₈-RedGO Composite was used as the positive electrode in a lithium battery. The anode was Lithium metal, the electrolyte a 1 M LiPF₆ solution of ethylene carbonate-ethylmethyl carbonate (1:1 by weight) and the cathode was free standing H_{4-X}V₃O₈-RedGO composite material.

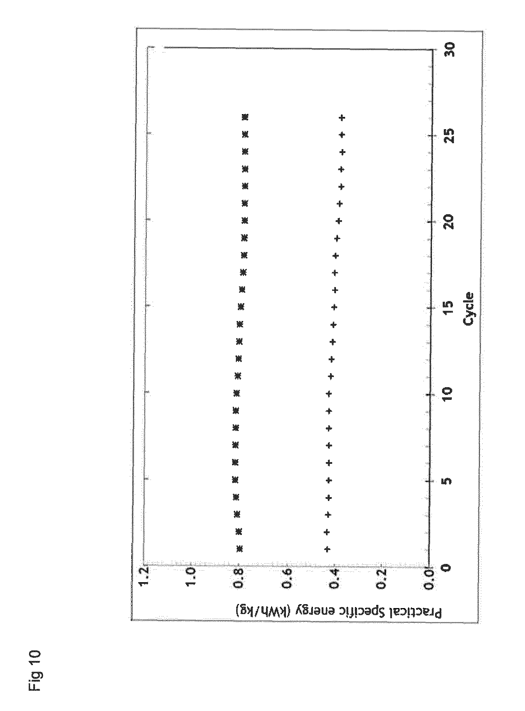

The specific capacity and the specific energy were computed using the practical mass of the cathode, that is the mass of the whole composite material. The cells were charged and discharge in galvanostatic mode at 100 A/kg between 4 V and 2.2 V vs. Li+/Li. The results are visualized in Fig. 10.

### References

[1] Daniel R. Dreyer et al., Chem. Soc. Rev., 2010, 39, 228-240.
[2] K. S. Novoselov et al, Science, 2004, 306, 666-669.
[3] Yanwu Zhu et al., Adv. Metr., 2010, 22, 3906-3924.
[4] Sasha Stankovich et al., Carbon, 2007, 45, 1558-1565.
[5] EP 2445049
[6] Tommy Kaspar, ETH Thesis 18931, 2010.
[7] US 20100081057
[8] US 20100143798
[9] US 20110045347
[10] WO 2006030361
[11] Zhong-Shuai Wu et al., ACS Nano, 2010, 4, 3187-3194.
[12] US 20120088156
[13] co-pending European patent application EP11195376.6

## Claims

1. A composite material comprising reduced graphene oxide (RedGO) with C:O ratio above 3 and at least one electrochemically active material (EAM) in form of nanoparticles.

2. The composite material of claim 1 wherein the wherein the carbon content of the composite is at most 5 % by weight.

3. The composite material of claim 1 or 2 wherein the EAM particles have an anisotropic morphology, preferably a fibrous morphology.

4. The composite material of any of claims 1 to 3 wherein the at least one EAM comprises and preferably consists of a tetravalent vanadium oxohydroxide, in particular H_{4-X}V₃O₈ with x ranging from 0.1 to 2.2.

5. The composite material of any of claims 1 to 4 incorporating at least one further EAM in form of nanoparticles, said EAM being selected from the croup consisting of transition metal oxides, transition metal phosphates, transition metal chalcogenides, transition metal halides, silicon, metallic nanoparticles, semiconducting particles and combinations thereof.

6. The composite material of any of claims 1 to 5, having a three dimensional mesoporous structure.

7. A method for producing the composite material of any of the preceding claims comprising the steps of
(a) mixing EAM starting material (startEAM) with an aqueous graphene oxide solution
(b) drying the graphene oxide-startEAM-composite
(c) heating the dry graphene oxide-startEAM-composite to a temperature of at least 50°C but below the decomposition temperature of the EAM and for a time sufficient to induce the desired reduction of the graphene oxide with respective change in the oxidation state of the transition metal in the EAM.

8. The method of claim 7 comprising a further heating step after step (c), said heating step comprising heating to up to 400 °C.

9. The method of claim 7 or 8, wherein the composite formed in step (a) is further processed prior to step (b), e.g. by at least one of coating, drop casting or pasting.

10. The method of any of claims 7 to 9 wherein the EAM starting material is H_{4-X}V₃O₈, the heating is performed to a temperature below 200 °C, preferably 180°C for 1 hour, and the EAM in the final product is H₄₋ₓV₃O₈ with x ranging from 0.1 to 2.2.

11. The method of any of claims 7 to 10, wherein the heating step (c) is performed in air.

12. An electrode comprising the composite material of any of claims 1 to 6.

13. The electrode of claim 12, said electrode being a free standing structure of said composite material.

14. A lithium metal or lithium ion battery comprising at least one electrochemical cell with one positive electrode and one negative electrode, at least one of said electrodes comprising a composite material of any of claims 1 to 6.

15. The lithium metal battery of claim 14, wherein said positive electrode has a practical specific energy of at least 700 Wh/kg.
